# EUROPÄISCHE PATENTSCHRIFT

(11) **EP 0 426 015 B1**
(45) Veröffentlichungstag und Bekanntmachung des Hinweises auf die Patenterteilung: **26.01.1994**
(21) Anmeldenummer: 90120528.6
(22) Anmeldetag: 26.10.1990
(51) Int. Cl.: B27D 1/00, B27M 3/00, B32B 21/13, E04C 3/14

(54) **Mehrschichtmassivholzerzeugnisse wie Balken, Bretter und Leimbinder sowie Verfahren zu deren Herstellung**
Multiply wood products such as beams, planks and glued boards and process for their manufacture
Produits lamellés en bois tels que poutres, planches et panneaux multiples collés et procédé pour leur fabrication

(30) Priorität: 01.11.1989 DE 3936314
(43) Veröffentlichungstag der Anmeldung: 08.05.1991
(73) Patentinhaber: Gebrüder Linck Maschinenfabrik "Gatterlinck" GmbH & Co. KG, D-77697 Oberkirch (DE)
(72) Erfinder: Gönner, Siegmar, W-7602 Oberkirch (DE)
(74) Vertreter: Fuchs Mehler Weiss

(56) Entgegenhaltungen:
- EP-A- 0 234 220
- EP-A- 0 376 818
- DE-A- 3 623 235
- US-A- 2 409 785

## Beschreibung

Die Erfindung betrifft ein Verfahren zum Herstellen von Merschichtmassivholzerzeugnissen wie Balken, Bretter und Leimbinder. Die Erfindung betrifft insbesondere ein verfahren zum Herstellen von Merschichtmassivholzerzeugnissen wie Balken, Bretter und Leimbinder, bei dem Holzlamellen gegebenenfalls nach bestimmten Vorbereitungsbehandlungen wie Trocknen, Besäumen, Oberflächennachbearbeitung oder dergleichen in mehreren Schichten in gegenseitiger Überlappung zu dem Merschichtmassivholzerzeugnis miteinander verleimt werden. Die Erfindung betrifft ferner nach einem solchen Verfahren hergestellte Holzerzeugnisse.

Es ist bekannt, Leimbinder aus Holz, beispielsweise für das Tragen von Hallendächern, Balken und auch Bretter als sog. Laminatbauteile herzustellen, bei denen eine Vielzahl von Holzlamellen schichtweise unter gegenseitiger Überlappung miteinander verleimt werden. Die Holzlamellen sind dünne Bretter von wenigen mm bis über 1 cm Dicke und Längen bis zu mehreren Metern. Der Vorteil der verwendung solcher Laminaterzeugnisse liegt darin, daß natürliche Schwachstellen im Holz durch die Mehrzahl der miteinander verleimten Holzschichten ausgeglichen und durch das fortschreitend überlappende Verleimen der Lamellen Bauteile erzeugt werden können, deren Abmessungen über die durch die Natur begrenzten möglichen Abmessungen eines Baumstammes hinausgehen. Diese Laminaterzeugnisse weisen im allgemeinen eine wesentlich höhere Festigkeit auf als nicht-verleimtes Massivholz.

Es ist auch bekannt, Holzlamellen durch spanlos schneidendes Zerteilen eines Kantholzes mit einem oder mehreren Messern zu erzeugen. Ein solches Verfahren ist beispielsweise der DE-OS 37 02 909 zu entnehmen. Das spanlose Erzeugen der Holzlamellen hat den Vorteil einer erheblichen Rohmaterialeinsparungl da bei Erzeugen solcher Lamellen durch Sägeschnitte je nach Dünnheit der Lamellen 40 % und mehr des Ausgangswerkstoffes als Sägemehl anfallen.

Bei dem spanlosen Erzeugen der Holzlamellen werden diese während des Abtrennens von einem Kantholz durch das Messer durch die unvermeidbare Querausdehnung des Messers im Winkel der Messerschneide von dem Kantholz abgeleitet. Dieses seitliche Ablenken der unmittelbar vom Kantholz abgetrennten Brettlamelle führt nicht nur zu einer im allgemeinen sogar zweiachsigen Verwerfung der Lamelle, die durch sich unmittelbar anschließende Gradrichteinrichtungen möglichst wieder rückgängig gemacht werden, sondern beeinflußt auch die Oberflächenstruktur der schneidend erzeugten Lamellen.

Dabei wurde gefunden, daß diejenige Seite der Holzlamelle, die während des Abtrennens vom Kantholz der Messerschneide zugewandt ist und im Rahmen dieser Beschreibung als Messerseite bezeichnet ist, eine möglicherweise offene Oberflächenstruktur aufweist, aus der sogar einige Holzfaserelemente hervorstehen können. Die Messerseite wird daher auch als offene Seite der Holzlamelle bezeichnet. Im Gegensatz dazu weist die dem Messer abgewandte Seite der Holzlamelle, die im Rahmen dieser Beschreibung als Gegenseite bezeichnet wird, eher geringfügige Vertiefungen auf und macht insgesamt einen geschlosseneren Eindruck, weswegen sie auch als geschlossene Seite bezeichnet wird. Dies kann von Einfluß auf Holzerzeugnisse sein, die eine möglichst einwandfreie Sichtfläche als Außenfläche aufweisen sollen.

Das paarweise Verleimen gleich großer spanlos geschnittener Holzlamellen zu Mehrschichtmassivholzerzeugnissen ist aus der DE-OS 36 23 235 A1 bekannt. Mit diesem Verfähren sollen brettartige, zweilagige Holzerzeugnisse bereitgestellt werden, bei denen die unter dem Aspekt der Festigkeit nachteilige Zweiseitigkeit der geschnittenen Lamelle kompensiert werden soll. Das beschriebene Holzerzeugnis soll in etwa die Festigkeitseigenschaften eines gesägten Brettes gleicher Dimension aufweisen.

Der Erfindung liegt jedoch die Aufgabe zugrunde, ein Verfahren zum Herstellen von Mehrschichtmassivholzerzeugnissen aufzuzeigen, mit dem sich unter Ausnutzung der Rohmaterial einsparenden spanlos schneidenden Erzeugung von Holzlamellen Mehrschichterzeugnisse maximaler Festigkeit erhalten lassen.

Diese Aufgabe wird verfahrensmäßig durch die kennzeichnenden Merkmale des Anspruchs 1 gelöst. Es hat sich nämlich durch Untersuchungen gezeigt, daß die unterschiedlichen Flächenstrukturen einer im Schneidverfahren erzeugten Holzlamelle nicht nur für das Aussehen der Lamelle relevant sind, sondern auch von erheblichem Einfluß auf deren Oberflächenfestigkeit sind. Tatsächlich neigt die Messerseite der Holzlamellen dazu, unter Zugbeanspruchung eher zum Bruch zu führen als die Gegenseite.

Bei Biegebelastung eines Brettes, Balkens oder Binders wird bekanntlich der der angreifenden Biegekraft abgewandte Teil des Bauteiles jenseits einer im wesentlichen spannungsneutralen Mittelfläche auf Zug beansprucht. Die Zugbeanspruchung wächst mit dem Abstand von der spannungsneutralen Mittelfläche des Bauteiles.

Wenn hier von Mittelfläche gesprochen wird, so soll dabei die bei Durchbiegung eines langgestreckten Laminatbauteiles im wesentlichen spannungsfreie Fläche bezeichnet sein. Es ist einzuräumen, daß die spannungsfreie Fläche nur dann die Mittelfläche ist, wenn das Bauteil einen zu der Mittelfläche im wesentlichen symmetrischen Querschnitt aufweist. Da im allgemeinen jedoch Bretter und Balken einen rechteckigen Querschnitt aufweisen, ist diese Bedingung dabei erfüllt. Leimbinder können beispielsweise auch einen trapezförmigen Querschnitt aufweisen, wobei dann die bei Biegung spannungsfreie Fläche nicht mehr in der Mitte liegt.

Erfindungsgemäß wurde nun festgestellt, daß die Biegebruchfestigkeit eines aus geschnittenen Holzlamellen hergestellten Laminatbauteiles optimiert werden kann, wenn zumindest an der einer Zugbelastung ausgesetzten Seite des Bauteiles die Gegenseiten der Holzlamellen im Laminat nach außen weisen.

Die Festigkeit des Bauteiles läßt sich dadurch steigern, daß die Holzlamellen derart angeordnet werden, daß ihre Gegenseiten im wesentlichen alle zu einer Außenfläche des Bauteiles hinweisen. Um die Festigkeitseigenschaften des Bauteiles auszunutzen, muß diese Außenseite dann natürlich als die der einwirkenden Biegekraft abgewandte Seite verwendet werden. Lediglich aus Gründen der Oberflächenoptik kann es wünschenswert sein, an der der Biegekraft zugewandten anderen Außenseite des Bauteiles die äußerste Lamellenschicht so auszubilden, daß ihre Gegenseiten auch hier außen liegen.

Abgesehen von der hier beanspruchten planmäßigen Seitenausrichtung der in einem Laminaterzeugnis zusammenzufügenden Holzlamellen ist für die Festigkeit des Holzerzeugnisses zusätzlich auch die Vorbereitung der Lamellen von Einfluß, die u.a. dazu führt, daß die Lamellen möglichst fugenlos zu einem kompakten Block zusammengefügt werden können. So werden die Holzlamellen im allgemeinen nach dem Schneiden unter gewisser Flächenbelastung getrocknet, wobei die beim Schneiden entstehenden Verwerfungen weiter beseitigt werden, sie werden dann im allgemeinen an ihren Längskanten besäumt und können zusätzlich an ihren Hauptflächen leicht überschliffen werden, um insbesondere an den Messerseiten herausstehende Faserteile zu beseitigen. Diese Vorbereitungsmaßnahmen sind jedoch nicht Gegenstand der vorliegenden Erfindung, sie sind vielmehr in einer parallelen Patentanmeldung gleichen Datums beansprucht.

Auch ist es bekannt, das fertige Laminaterzeugnis je nach Oberflächenanforderungen nach Fertigstellung noch zu schleifen.

Im folgenden wird die Erfindung zusätzlich anhand der Figuren der beigefügten Zeichnung erläutert. Es stellt dar:

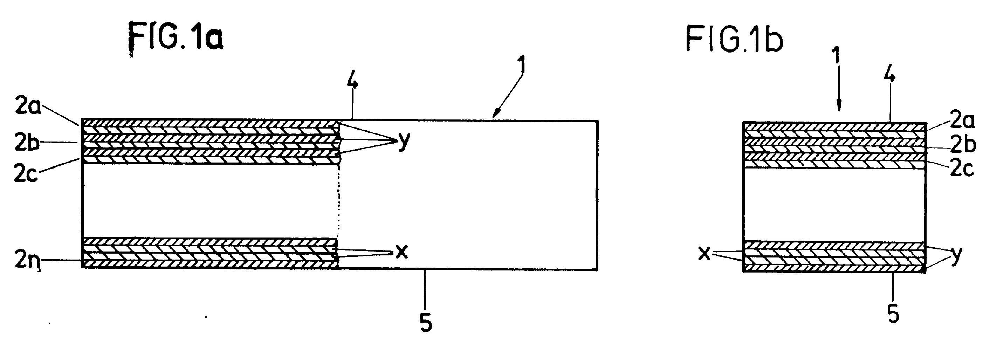

- Fig. 1: einen vielschichtigen Balken im Längsschnitt (Fig. 1a) und im Querschnitt (Fig. 1b), bei dem die Gegenseiten der Holzlamellen mit Ausnahme der untersten Holzlamelle zur oberen Außenfläche des Balkens hinweisen und

In den Fig. 1a und 1b ist ein Holzerzeugnis 1 in Form eines vielschichtigen Balkens dargestellt, der aus mehreren übereinander angeordneten Lagen von Holzlamellen 2a-2n besteht. Die Holzlamellen 2 werden durch spanloses Abtrennen von einem Kantholz mittels eines Messers hergestellt und besitzen eine beim Abtrennvorgang dem Messer zugewandt gewesene Messerseite x und eine dieser gegenüberliegende Gegenseite y. Die Messerseiten x der Holzlamellen 2 weisen infolge des Abtrennens vom Kantholz eine meist offene Oberflächenstruktur auf, so daß die Messerseite in den beigefügten Zeichnungen weit-schraffiert dargestellt ist. Demgegenüber besitzt die dem Messer abgewandte Seite der Holzlamelle 2, die Gegenseite y, eher eine geschlossenere Oberflächenstruktur, so daß diese Seite in den Zeichnungen eng-schraffiert dargestellt ist. Die Messerseite x und die Gegenseite y sind in jeder Holzlamelle 2 zur besseren Darstellung jeweils durch eine dünne Linie getrennt.

Im Beispielsfalle der Fig. 1a und 1b sind die Holzlamellen 2 in mehrschichtiger Lage derart übereinander angeordnet, daß die Gegenseiten y der Holzlamellen 2 alle zu einer Außenfläche 4 des Holzerzeugnisses 1 hinweisen, bis auf eine Ausnahme.

In besonderer Ausbildungsform, wie hier dargestellt, kann eine der äußeren Holzlamellen 2n mit ihrer Gegenseite y auf die der mit 4 bezeichneten Außenfläche des Holzerzeugnisses 1 gegenüberliegenden Außenfläche 5 hinweisen, so daß diese eine geschlossenere Oberfläche aufweist.

Zur Verbesserung der Festigkeitseigenschaften des Holzerzeugnisses 1 soll die mit 4 bezeichnete Außenseite als die der einwirkenden Biegekraft abgewandten Seite verwendet werden, da die Gegenseiten y der Holzlamellen 2 im wesentlichen alle zur Außenfläche 4 des Holzerzeugnisses 1 hinweisen.

## Patentansprüche

1. Verfahren zum Herstellen von Mehrschicht-Massivholzerzeugnissen wie Balken, Bretter, Leimbinder, bei dem Holzlamellen, die durch spanloses Abtrennen von einem Kantholz mittels eines Messers erzeugt wurden und die eine beim Abtrennvorgang dem Messer zugewandte Messerseite und eine der Messerseite entgegengesetzte Gegenseite aufweisen, gegebenenfalls nach bestimmten Vorbereitungshandlungen wie Trocknen, Besäumen, Oberflächennachbearbeitung oder dergleichen zu Mehrschicht-Massivholzerzeugnissen verleimt werden, wobei mindestens zwei aus mindestens jeweils einer Lamelle bestehende Schichten so angeordnet werden, daß mindestens eine Gegenseite einer außenliegenden Lamelle zu einer ersten Außenfläche weist,
dadurch gekennzeichnet,
daß weitere Lamellenschichten zwischen den mindestens zwei Schichten in der Weise angeordnet werden, daß die Gegenseiten dieser Lamellenschichten alle zu dieser ersten Außenfläche gerichtet sind.

2. Verfahren nach Anspruch 1, dadurch gekennzeichnet, daß die außenliegende Lamellenschicht, die an eine zweite Außenschicht angrenzt, in der Weise angeordnet wird, daß die Gegenseite der Lamellen dieser Schicht zu dieser zweiten Außenschicht hinweist.

3. Verfahren nach Anspruch 1, dadurch gekennzeichnet, daß die Lamellen, die an die zweite Außenschicht angrenzen, in der Weise angeordnet werden, daß ihre Gegenseite zur ersten Außenschicht hinweist.

4. Mehrschicht-Massivholzerzeugnis, insbesondere als Brett, Balken oder Leimbinder, bestehend aus zwischen jeweils zwei äußeren Lamellenschichten (2a, 2n) in mehreren Lagen überlappend miteinander verleimten Holzlamellen, die durch spanloses Abtrennen von einem Kantholz mittels eines Messers erzeugt wurden und die eine beim Abtrennvorgang dem Messer zugewandt gewesene Messerseite (x) und eine dieser Messerseite gegenüberliegende Gegenseite (y) aufweisen, dadurch gekennzeichnet, daß die Holzlamellen (2) mindestens der ersten äußeren Lamellenschicht (2a) und aller zwischen den äußeren Lamellenschichten angeordneten Lamellen in der Art angeordnet sind, daß die Gegenseiten dieser Lamellen (2) alle zu einer ersten Außenfläche (4) des Holzerzeugnisses (1) hinweisen.

5. Holzerzeugnis nach Anspruch 4, dadurch gekennzeichnet, daß die Lamellen (2) der zweiten äußeren Lamellenschicht (2n) der Art angeordnet sind, daß die Gegenseiten dieser Lamellen (2) alle zu einer zweiten Außenfläche (5) hinweisen.

6. Holzerzeugnis nach Anspruch 4, dadurch gekennzeichnet, daß die Lamellen (2) der zweiten äußeren Lamellenschicht (2n) der Art angeordnet sind, daß die Gegenseiten dieser Lamellen alle zu der ersten Außenfläche (4) hinweisen.

## Claims

1. A process to manufacture multiply wood products such as beams, planks, glued boards, wherein laminas of wood, being produced by chip-less severance from a squared timber by means of a cutter and comprising a cutter side facing the cutter during severance and a counterside opposite to said cutter side, are glued together to obtain multiply wood products, if necessary after certain preparatory actions such as drying, square-edge sawing, surface refinishing or the like, and wherein at least two layers each consisting of at least one lamina are arranged thus that at least one counterside of an external lamina points to a first external surface,
characterized in that
further lamina layers are disposed between the at least two layers in such a way that all of the countersides of said laminar layers are orientated to said first external surface.

2. A process according to claim 1, characterized in that the external laminar layer adjacent to said second external layer is arranged in such a way that the counterside of the lamellas of said layer faces said second external layer.

3. A process according to claim 1, characterized in that the lamellas adjacent to said second external layer are arranged in such a way that their counterside faces said first external layer.

4. A multiply wood product, being particularly developed as blank, beam or glued board and consisting of several layers of laminas of wood glued together in overlapping relationship between each of two external laminar layers (2a, 2n), said laminas of wood being produced by chip-less severance of a squared timber by means of a cutter and comprising a cutterside (x) that has been facing the cutter during severance, and a counterside (y) opposite to said cutterside
characterized in that
said laminas of wood (2) of at least the first external laminar layer (2a) and of all of the lamellas disposed between the said external laminar layers are arranged in such a way that all of the countersides of said lamellas (2) are facing a first external surface (4) of the wood product (1).

5. A wood product according to claim 4, characterized in that the lamellas (2) of the second external laminar layer (2n) are arranged in such a way that all of the countersides of said lamellas (2) are facing a second external surface (5).

6. A wood product according to claim 4, characterized in that the lamellas (2) of the second external laminar layer (2n) are arranged in such a way that all of the countersides of said lamellas are facing said first external surface (4).

## Revendications

1. Procédé pour la fabrication de produits à plusieurs couches en bois tels que poutres, planches ou panneaux multiples collés, en quoi on a collé des lamelles de bois, pour parvenir à des produits à plusieurs couches en bois, le cas échéant après certains traitements préparatoires tels que séchage, avivage en sciant, traitement améliorant la surface et autres actions de ce genre, lesdites lamelles de bois étant fabriquées par séparation sans enlèvement de copeaux d'un bois équarri au moyen d'une lame et, au cours de la séparation, comportant un côté de lame tourné vers la lame et un contre-côté opposé à la lame, à l'occasion de quoi au moins deux couches, chacune se composant d'au moins une seule lamelle, sont arrangées de façon qu' au moins un seul contre-côté d'une lamelle extérieure est orienté à une première surface extérieure,
caractérisé en ce que
l'on dispose des couches lamellées supplémentaires entre les au moins deux couches de telle façon que tous les contre-côtés desdites couches lamellées sont orientés à ladite première surface extérieure.

2. Procédé d'après la revendication 1, caractérisé en ce que la couche lamellée extérieure touchant à une deuxième couche extérieure est arrangée de telle façon que le contre-côté des lamelles de ladite couche est orienté à ladite deuxième couche extérieure.

3. Procédé d'après la revendication 1, caractérisé en ce que les lamelles touchant à ladite couche extérieure sont arrangées de telle façon que son contre-côté est orienté à la première couche extérieure.

4. Produit à plusieurs couches en bois, en particulier en qualité de planche, poutre ou panneaux multiples collés, se composant de lamelles de bois, collées avec chevauchement l'une à l'autre en plusieurs plis, chacune entre deux couches lamellées extérieures (2a, 2n), lesdites lamelles de bois étant fabriquées d'un bois équarri par séparation sans enlèvement de copeaux au moyen d'une lame et présantant un côté de la lame (x) qui avait été tourné vers la lame au corus de la séparation et un contre-côté (y) opposé audit côté de la lame,
caractérisé en ce que
les lamelles de bois (2) au moins de la première couche lamellée (2a) et de toutes les lamelles disposées entre les couches lamellées extérieures sont arrangées de façon que tous les contre-côtés desdites lamelles (2) sont tournés vers une première surface extérieure (4) du produit en bois (1).

5. Produit en bois d'après la revendication 4, caractérisé en ce que les lamelles (2) de la seconde couche extérieure (2n) sont arrangées de telle façon que tous les contre-côtés desdites lamelles (2) sont tournés vers une deuxième surface extérieure (5).

6. Produit en bois d'après la revendication 4, caractérisé en ce que les lamelles (2) de la seconde couche extérieure (2n) sont arrangéees de telle façon que tous les contre-côtés desdites lamelles (2) sont tournés vers la première surface extérieure (4).
